# EUROPEAN PATENT APPLICATION

(11) **EP 2 662 965 A2**
(43) Date of publication of application: **13.11.2013**
(21) Application number: 12174702.6
(22) Date of filing: 03.07.2012
(51) Int. Cl.: H02M 3/338

(54) **LLC resonant power converter with current-circulating circuit for enabling light-load regulation**

(30) Priority: 07.05.2012 TW 101116170
(71) Applicant: Skynet Electronic Co., Ltd., Taipei (TW)
(72) Inventor: Liang, Jim-Hung, Taipei (TW); Chen, Ching-Chuan, Taipei (TW)
(74) Representative: Karakatsanis, Georgios

(57) **Abstract**

The present invention is to provide a power converter, which includes a half-bridge circuit (52) parallel-connected to an input voltage (Vs) and having two series-connected power switches (Q1,Q2), an LLC resonant circuit formed by a resonant inductor (Lr), magnetic inductance of a primary winding (Lm) and a resonant capacitor (Cr), a current-circulating circuit parallel-connected to the half-bridge circuit (51) and having two series-connected rectifiers (D3,D4), and a full-wave rectification circuit (53) connected to a secondary winding (NS1, NS2) for generating an output voltage across an output capacitor (Co). The LLC resonant circuit is parallel-connected to one of the power switches, and the line between the two rectifiers is cross-connected to the line between the resonant inductor and the primary winding (Np). Thus, since the current-circulating circuit is able to guide current through the resonant inductor into circulation in switching moment of the power switches, parasitic capacitance of the primary winding is prevented from being overcharged by the current through the resonant inductor accordingly.

## Description

### FIELD OF THE INVENTION

The present invention relates to an LLC resonant power converter, more particularly to an LLC resonant power converter having a current-circulating circuit for enabling light-load regulation, which utilizes an LLC resonant circuit to smoothly receive energy transferred from an input voltage, and utilizes the current-circulating circuit to guide current through a resonant inductor of the LLC resonant power converter into circulation in switching moment of power switches of the LLC resonant power converter, thereby parasitic capacitance of primary winding of the LLC resonant power converter is prevented from resonating with the resonant inductor and hence from being overcharged, either forwardly or reversely, by the current through the resonant inductor. Thus, neither secondary winding nor output capacitor of the LLC resonant power converter will have spike currents, so as to effectively maintain output voltage of the LLC resonant power converter in a certain range when under light load.

### BACKGROUND OF THE INVENTION

Recently, due to their high power conversion efficiency and high power density, LLC resonant power converters have been widely used in various electronic products. At the same time, however, the incapability of LLC resonant power converters to regulate output voltage under light load, i.e., to perform light-load regulation, has become an issue.

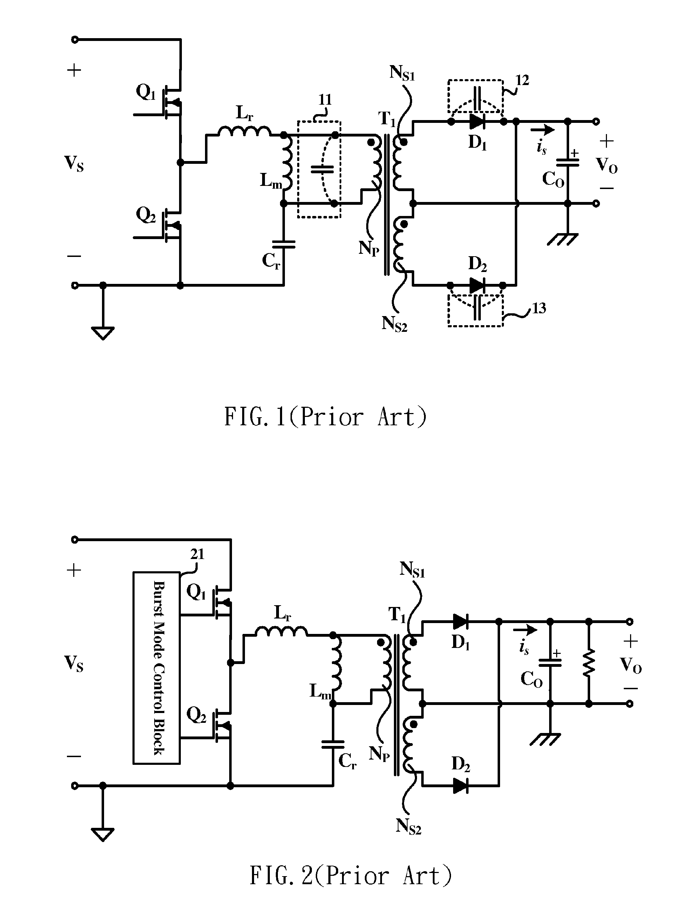

FIG. 1 shows a conventional LLC resonant power converter, the main reason why this conventional LLC resonant power converter is incapable of light-load regulation is that, in the moment when the power switches are switched, the parasitic capacitance 11 of the primary winding N_{P} and the parasitic capacitances 12 and 13 of the rectifiers in the full-wave rectification circuit on the secondary side are bound to resonate with the resonant inductor Lᵣ, such that excessive energy accumulates in the parasitic capacitances. As the excessive energy substantially increases the voltage gain of the LLC resonant power converter under light load, the LLC resonant power converter is prevented from regulating the output voltage Vₒ effectively; that is to say, the LLC resonant power converter cannot keep the output voltage Vₒ in a designed range.

With respect to the above, there were two conventional approaches being utilized for solving the incapability of light-load regulation. One approach, as shown in FIG. 2, is to add a burst mode controller 21 to the primary side of the LLC resonant power converter. The burst mode controller 21 provides burst mode control over the two power switches Q₁ and Q₂ on the primary side, forcing the LLC resonant power converter to operate intermittently under light load. More specifically, the LLC resonant power converter stops operation when its output voltage Vₒ is about to reach the upper limit value of a designed output voltage, and resumes operation when the output voltage Vₒ is about to reach the lower limit value of the designed output voltage. However, as the designed burst frequency of the burst mode controller 21 includes not only a switching period in which the power switches Q₁ and Q₂ are switched, but also a stopped period, the LLC resonant power converter makes a series of nearly audio-frequency noises when operating at the designed burst frequency. Hence, although this approach is effective in regulating the output voltage Vₒ and keeping it in the designed range, the annoying noise causes a certain degree of noise pollution around the LLC resonant power converter.

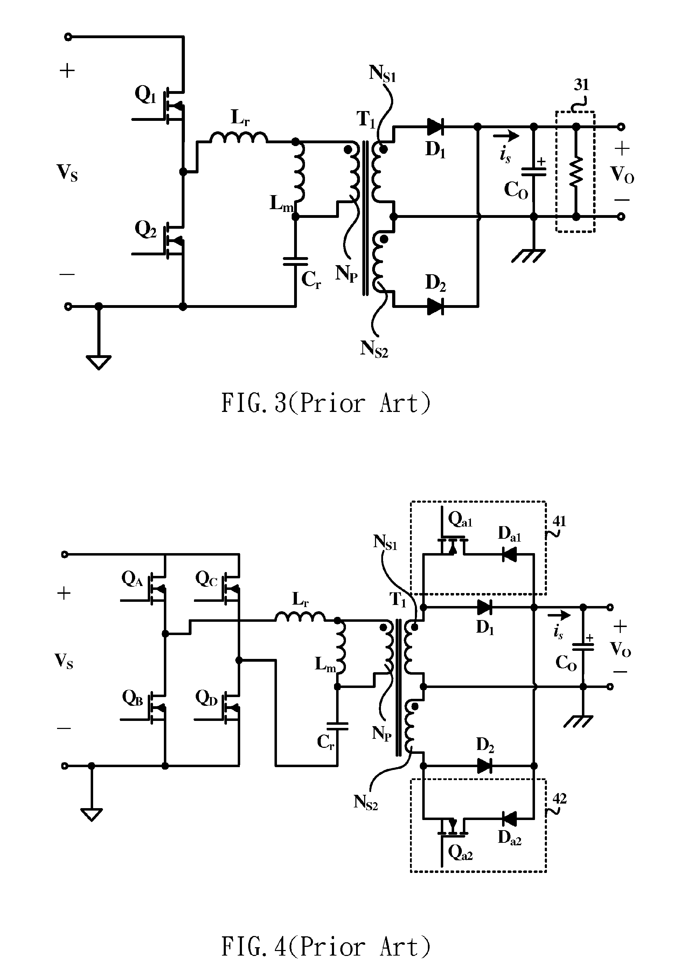

The other approach is to add a dummy resistor 31 to the secondary side of the LLC resonant power converter, as shown in FIG. 3. The dummy resistor 31 is connected in parallel to the output capacitor Cₒ on the secondary side to increase the load. Thus, the LLC resonant power converter is kept from operating under light load, and regulation of the output voltage Vₒ is achievable. Nonetheless, this approach compromises the power conversion efficiency of the LLC resonant power converter and, because of the dummy resistor 31, causes high power consumption under light load (e.g., in the standby state).

Therefore, under the premise of maintaining existing power conversion efficiency and preventing noise generation, neither of the approaches can enable an LLC resonant power converter to perform effective light-load regulation on its output voltage Vₒ.

In view of the above, the reason why the conventional LLC resonant power converter cannot effectively regulate its output voltage Vₒ under light load is that the parasitic capacitance of the primary winding and the parasitic capacitances of the two rectifiers on the secondary side are bound to resonate with the resonant inductor Lᵣ in the moment when the power switches are switched, thereby causing accumulation of excessive energy in the parasitic capacitances. The solution proposed in the prior art is illustrated in FIG. 4, in which each of the two rectifiers D₁ and D₂ on the secondary side of the LLC resonant power converter is parallel-connected with an additional secondary recharging circuit 41, 42. Thus, when any excessive energy accumulated in the parasitic capacitance of the primary winding N_{P} is transferred to the secondary side, the secondary recharging circuits 41 and 42 can recharge the primary side with the excessive energy received. This solution, though capable of regulating the output voltage Vₒ and keeping it in a designed range, requires an external driving circuit (not shown) for switching the switch Qₐ₁, Qₐ₂ in each of the secondary recharging circuits 41 and 42. Moreover, the control signals generated by the external driving circuits are determined by the control signals of the power switches Q_{A}, Q_{B}, Q_{C}, and Q_{D} on the primary side. Consequently, not only are the overall circuit complexity and production cost of the LLC resonant power converter significantly increased, but also the additional computation data and procedures must result in propagation delay of the related control signals, making it impossible for the secondary recharging circuits 41 and 42 to recharge the primary side in real time with the excessive energy received. As such, effective regulation of the output voltage Vₒ under light load is unattainable after all.

Therefore, the issue to be addressed by the present invention is to provide a simple circuit design for an LLC resonant power converter which allows the LLC resonant power converter to generate an output voltage according to practical needs, and which prevents accumulation of excessive energy in parasitic capacitances and thereby prevents spike currents from occurring in the secondary winding or output capacitor that generates the output voltage, so as for the LLC resonant power converter to effectively maintain the output voltage in a certain range under light load.

### BRIEF SUMMARY OF THE INVENTION

In view of the aforementioned drawbacks of the conventional LLC resonant power converters, the inventor of the present invention put years of practical experience into extensive research and experiment and finally succeeded in developing an LLC resonant power converter with a current-circulating circuit for enabling light-load regulation. According to the present invention, neither the secondary winding nor the output capacitor of the LLC resonant power converter will have spike currents which may otherwise result from the accumulation of excessive energy in a parasitic capacitance of the LLC resonant power converter, and this allows the output voltage of the LLC resonant power converter to be effectively maintained in a certain range under light load.

It is an object of the present invention to provide an LLC resonant power converter having a current-circulating circuit for enabling light-load regulation. The LLC resonant power converter includes a half-bridge circuit, a resonant inductor, a resonant capacitor, a current-circulating circuit, a transformer, and a full-wave rectification circuit. The half-bridge circuit is composed of two series-connected power switches and is parallel-connected to an input voltage. The resonant inductor, the magnetic inductance inherent in the primary winding of the transformer, and the resonant capacitor are series-connected to form an LLC resonant circuit. The LLC resonant circuit is parallel-connected to one of the power switches. The current-circulating circuit is composed of two series-connected rectifiers and is parallel-connected to the half-bridge circuit. The line between the two rectifiers is cross-connected to the line between the resonant inductor and the primary winding. The full-wave rectification circuit is connected to the secondary winding of the transformer and is configured for generating an output voltage across an output capacitor. As the LLC resonant circuit can smoothly receive the energy transferred from the input voltage, and the current-circulating circuit can guide the current through the resonant inductor into circulation in the switching moment of the power switches, the parasitic capacitance of the primary winding is prevented from resonating with the resonant inductor and hence from being overcharged, either forwardly or reversely, by the current through the resonant inductor. Also, the voltage across the parasitic capacitance of the primary winding is kept from exceeding the difference obtained by subtracting the voltage across the resonant capacitor from the input voltage or exceeding the voltage across the resonant capacitor. Since in the switching moment of the power switches no excessive energy will accumulate in the parasitic capacitance of the primary winding, let alone being transferred to the secondary winding, neither the secondary winding nor the output capacitor will have spike currents which may otherwise occur if excessive energy accumulates in the parasitic capacitance. And because of that, the LLC resonant power converter when under light load can effectively maintain the output voltage in a certain range, e.g., within ±5% of the designed output voltage.

### BRIEF DESCRIPTION OF THE SEVERAL VIEWS OF THE DRAWINGS

The structure as well as a preferred mode of use, further objects, and advantages of the present invention will be best understood by referring to the following detailed description of some illustrative embodiments in conjunction with the accompanying drawings, in which:

FIG. 1 is a schematic circuit diagram of a conventional LLC resonant power converter;

FIG. 2 is a schematic circuit diagram of another conventional LLC resonant power converter;

FIG. 3 is a schematic circuit diagram of still another conventional LLC resonant power converter;

FIG. 4 is a schematic circuit diagram of yet another conventional LLC resonant power converter;

FIG. 5 is a schematic circuit diagram of the first preferred embodiment of the present invention;

FIGS. 6(a) and 6(b) are partial schematic circuit diagrams illustrating the operating principle of the present invention;

FIG. 7 is a schematic circuit diagram of the second preferred embodiment of the present invention;

FIG. 8 is a schematic circuit diagram of the third preferred embodiment of the present invention;

FIG. 9 is a schematic circuit diagram of the fourth preferred embodiment of the present invention;

FIGS. 10(a) and 10(b) are graphs obtained by sampling and measuring a voltage and a current of each of the LLC resonant power converters in FIGS. 1 and 5, schematically showing the waveform of the voltage *vₚ* across the parasitic capacitance of the primary winding N_{P} and the waveform of the current *iₛ* on the secondary side; and

FIGS. 11(a) and 11(b) are load curves obtained by sampling and measuring a voltage and a current of each of the LLC resonant power converters in FIGS. 1 and 5, schematically showing the curve corresponding to the output voltage Vₒ generated by each LLC resonant power converter over a range of loads.

### DETAILED DESCRIPTION OF THE INVENTION

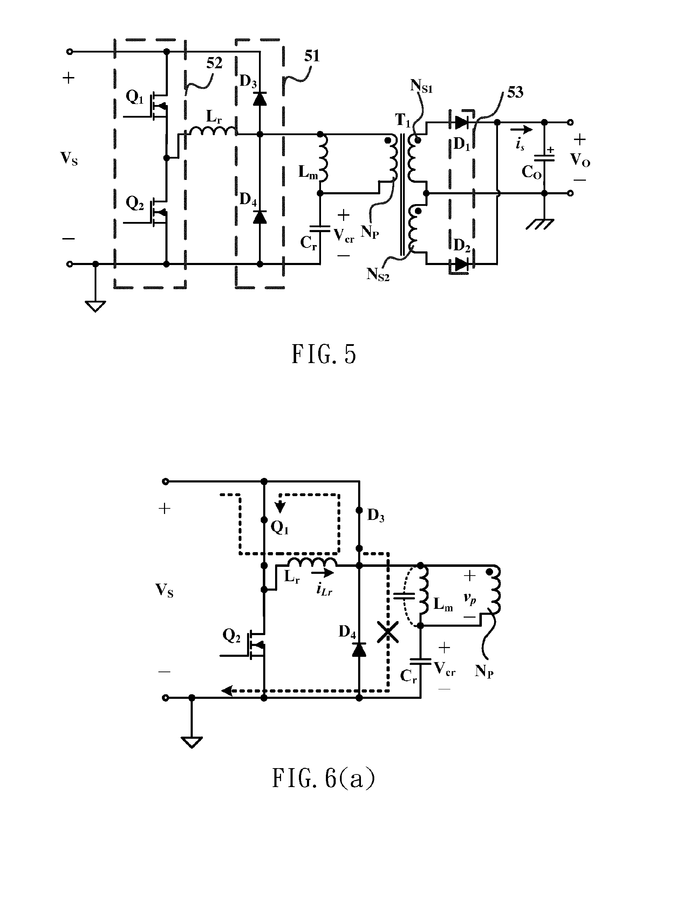

The first preferred embodiment of the present invention provides an LLC resonant power converter having a current-circulating circuit for enabling light-load regulation as shown in FIG. 5. This resonant power converter includes a half-bridge circuit 52, a resonant inductor Lᵣ, a resonant capacitor Cᵣ, a current-circulating circuit 51, a transformer T₁, and a full-wave rectification circuit 53. The half-bridge circuit 52 is composed of a first power switch Q₁ and a second power switch Q₂ connected in series and is connected in parallel to an input voltage Vₛ. The gate of each of the first power switch Q₁ and the second power switch Q₂ is connected to the corresponding control pin of a resonant control chip (not shown). The drain of the first power switch Q₁ is connected to the positive terminal of the input voltage Vₛ. The source of the first power switch Q₁ is connected to the drain of the second power switch Q₂. The source of the second power switch Q₂ is connected to the negative terminal of the input voltage Vₛ. Thus, the half-bridge circuit 52 is configured to smoothly receive the energy transferred from the input voltage Vₛ and provide a stable voltage to the transformer T₁.

The primary winding N_{P} of the transformer T₁ has an inherent magnetic inductance Lₘ which is shown in FIG. 5 as parallel-connected to the primary winding N_{P}. The resonant inductor Lᵣ, the magnetic inductance Lₘ, and the resonant capacitor Cᵣ are sequentially connected in series to form an LLC resonant circuit, which is connected in parallel to the second power switch Q₂. The transformer T₁ serves the main purpose of isolation and has a first secondary winding N_{S1} and a second secondary winding N_{S2} in addition to the primary winding N_{P}. The first secondary winding N_{S1} and the second secondary winding N_{S2} are connected in series at one end. The primary winding N_{P} has one end connected via the resonant inductor Lᵣ to the line between the two power switches Q₁ and Q₂ and has an opposite end connected to one end of the resonant capacitor Cᵣ. The other end of the resonant capacitor Cᵣ is connected to the source of the second power switch Q₂.

As shown in FIG. 5, the full-wave rectification circuit 53 is composed of a first rectifier D₁ and a second rectifier D₂. The positive end of the first rectifier D₁ is connected to the other end of the first secondary winding N_{S1} while the positive end of the second rectifier D₂ is connected to the other end of the second secondary winding N_{S2}. The negative ends of both the first rectifier D₁ and the second rectifier D₂ are connected together and are commonly connected to the positive terminal of an output capacitor Cₒ. The negative terminal of the output capacitor Cₒ is connected to the line between the first secondary winding N_{S1} and the second secondary winding N_{S2}. Thus, the transformer T₁ can generate the desired output voltage Vₒ across the output capacitor Cₒ on the secondary side, so as for the output capacitor Cₒ to provide the output voltage Vₒ stably to a load (not shown) connected across the output end.

Referring again to FIG. 5, the current-circulating circuit 51 is composed of a third rectifier D₃ and a fourth rectifier D₄ connected in series and is connected in parallel to the half-bridge circuit 52. The positive end of the third rectifier D₃ is connected to the negative end of the fourth rectifier D₄, and the line between the third rectifier D₃ and the fourth rectifier D₄ is cross-connected to the line between the resonant inductor Lᵣ and the primary winding N_{P} (i.e., the magnetic inductance Lₘ). Hence, in the switching moment of the power switches Q₁ and Q₂, the current-circulating circuit 51 can guide the current through the resonant inductor Lᵣ and cause this current to be circulated, as explained in further detail below. It should be pointed out that, in the first embodiment, the power switches Q₁ and Q₂ can be metal-oxide-semiconductor field-effect transistors (MOSFETs) or other equivalent power switches, and the rectifiers D₁, D₂, D₃, and D₄ can be rectifier diodes or other equivalent rectifiers.

Referring to FIG. 6(a), once the power switch Q₂ is turned off by the resonant control chip (not shown), the power switch Q₁ will be turned on by the resonant control chip after a dead time. As a result, a loop is formed by the input voltage Vₛ, the power switch Q₁, the resonant inductor Lᵣ, the parasitic capacitance of the primary winding N_{P}, and the resonant capacitor Cᵣ. Moreover, a loop current is generated which forwardly charges the parasitic capacitance of the primary winding N_{P}. Owning to the inevitable resonance between the resonant inductor Lᵣ and the parasitic capacitance, the parasitic capacitance of the primary winding N_{P} will be overly forwardly charged. However, as soon as the voltage *vₚ* across the parasitic capacitance becomes greater than the difference obtained by subtracting the voltage V_{Cr} across the resonant capacitor Cᵣ from the input voltage Vₛ, the third rectifier D₃ in the current-circulating circuit 51 will be activated to guide the current *i_{Lr}* through the resonant inductor Lᵣ to be circulated in a loop formed by the power switch Q₁, the resonant inductor Lᵣ, and the third rectifier D₃, as indicated by the upper dashed-line arrow in FIG. 6(a). Consequently, the current *i_{Lr}* through the resonant inductor Lᵣ is kept from overly forwardly charging the parasitic capacitance of the primary winding N_{P}, and the voltage *vₚ* across the parasitic capacitance of the primary winding N_{P} is kept from exceeding the difference obtained by subtracting the voltage V_{Cr} across the resonant capacitor Cᵣ from the input voltage Vₛ.

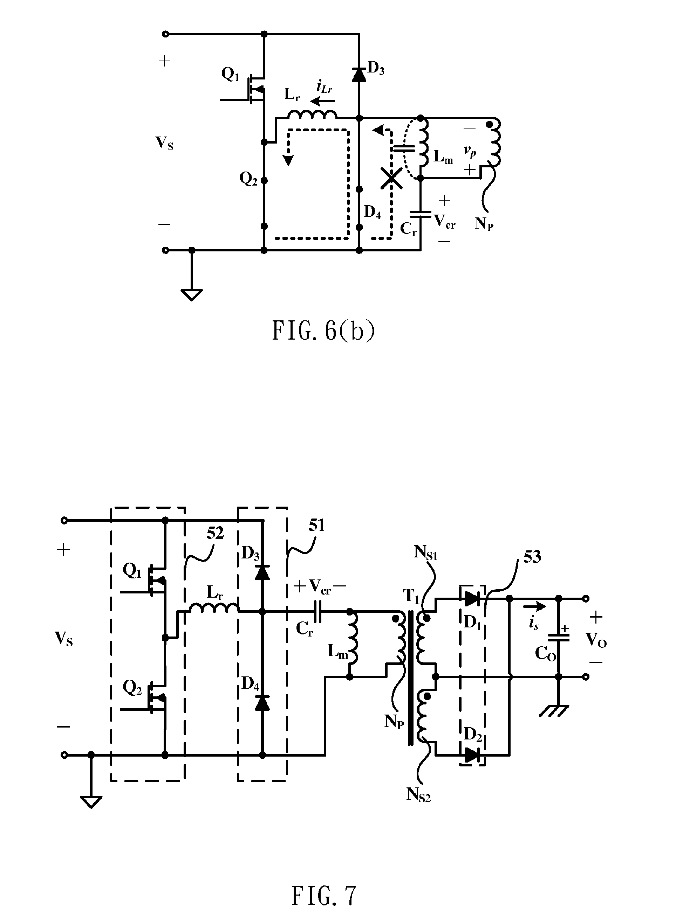

Referring to FIG. 6(b), once the power switch Q₁ is turned off by the resonant control chip, the power switch Q₂ will be turned on by the resonant control chip after a dead time. As a result, a loop is formed by the power switch Q₂, the resonant inductor Lᵣ, the parasitic capacitance of the primary winding N_{P}, and the resonant capacitor Cᵣ. Moreover, a loop current is generated which reversely charges the parasitic capacitance of the primary winding N_{P}. Owning to the inevitable resonance between the resonant inductor Lᵣ and the parasitic capacitance, the parasitic capacitance of the primary winding N_{P} will be overly reversely charged. However, as soon as the voltage *vₚ* across the parasitic capacitance becomes greater than the voltage V_{Cr} across the resonant capacitor Cᵣ, the fourth rectifier D₄ in the current-circulating circuit 51 will be activated to guide the current *i_{Lr}* through the resonant inductor Lᵣ to be circulated in a loop formed by the power switch Q₂, the resonant inductor Lᵣ, and the fourth rectifier D₄, as indicated by the left dashed-line arrow in FIG. 6(b). Consequently, the current *i_{Lr}* in the resonant inductor Lᵣ is kept from overly reversely charging the parasitic capacitance of the primary winding N_{P}, and the voltage *vₚ* across the parasitic capacitance of the primary winding N_{P} is kept from exceeding the voltage V_{Cr} across the resonant capacitor Cᵣ.

According to the above, the third rectifier D₃ and the fourth rectifier D₄ are naturally activated only in the switching moment of the power switches Q₁ and Q₂ and only if the voltage *vₚ* across the parasitic capacitance of the primary winding N_{P} is either greater than the difference obtained by subtracting the voltage V_{Cr} across the resonant capacitor Cᵣ from the input voltage Vₛ or greater than the voltage V_{Cr} across the resonant capacitor Cᵣ. And thanks to the activation of the third rectifier D₃ and the fourth rectifier D₄, no excessive energy will accumulate in the parasitic capacitance of the primary winding N_{P}; hence, no excessive energy will be transferred to the secondary winding N_{S1} or N_{S2}. Consequently, spike currents which may otherwise result from excessive energy accumulated in the parasitic capacitance will not occur in the secondary winding N_{S1} or N_{S2} or the output capacitor Cₒ, and this allows the output voltage Vₒ generated by the resonant power converter under light load to be effectively maintained in a certain range, e.g., within ±5% of the designed output voltage.

What is shown in FIG. 5 is only one preferred embodiment of the present invention; implementation of the present invention is by no means limited thereto. For example, the circuit design of the primary or secondary side of the LLC resonant power converter may be modified according to practical needs. Nevertheless, whatever such modification is, the circuit structure of the present invention refers specifically to one applicable to an LLC resonant power converter. Therefore, all equivalent circuit structures that are based on the design concept of the present invention and easily conceivable by a person skilled in the art of LLC resonant power converter design should fall within the scope of the present invention, provided that the resultant LLC resonant power converter is furnished with the current-circulating circuit 51 for guiding and circulating the current through the resonant inductor Lᵣ in the switching moment of the power switches Q₁ and Q₂ so as to prevent the voltage *vₚ* across the parasitic capacitance of the primary winding N_{P} from either exceeding the difference obtained by subtracting the voltage V_{Cr} across the resonant capacitor Cᵣ from the input voltage Vₛ or exceeding the voltage V_{Cr} across the resonant capacitor Cᵣ, thereby allowing the output voltage Vₒ generated by the LLC resonant power converter under light load to be effectively kept in a certain range.

The second preferred embodiment of the present invention provides an LLC resonant power converter having a current-circulating circuit for enabling light-load regulation as shown in FIG. 7. This LLC resonant power converter is different from its counterpart in FIG. 5 in that the resonant capacitor Cᵣ is now located between the primary winding N_{P} and the resonant inductor Lᵣ. Nevertheless, the operating principle and effects of the LLC resonant power converter in FIG. 7 are identical to those of the LLC resonant power converter in FIG. 4 and therefore will not be described repeatedly.

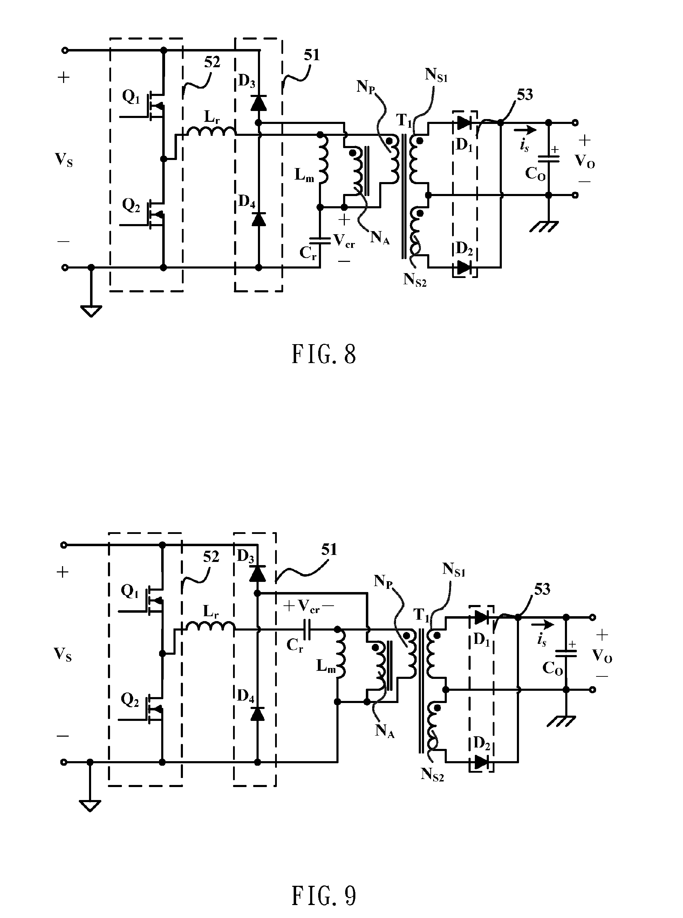

The third preferred embodiment of the present invention provides an LLC resonant power converter having a current-circulating circuit for enabling light-load regulation as shown in FIG. 8. As this LLC resonant power converter has the same secondary-side circuit as its counterpart in FIG. 5, only its primary-side circuit is detailed as follows. The primary-side circuit of the resonant power converter in this embodiment includes a half-bridge circuit 52, a resonant inductor Lᵣ, a resonant capacitor Cᵣ, a current-circulating circuit 51, an auxiliary winding N_{A}, and a transformer T₁. The half-bridge circuit 52 is composed of a first power switch Q₁ and a second power switch Q₂ connected in series and is connected in parallel to an input voltage Vₛ. The gate of each of the first power switch Q₁ and the second power switch Q₂ is connected to the corresponding control pin of a resonant control chip (not shown). The drain of the first power switch Q₁ is connected to the positive terminal of the input voltage Vₛ. The source of the first power switch Q₁ is connected to the drain of the second power switch Q₂. The source of the second power switch Q₂ is connected to the negative terminal of the input voltage Vₛ. Thus, the half-bridge circuit 52 is configured to smoothly receive the energy transferred from the input voltage Vₛ and provide a stable voltage to the transformer T₁. The primary winding N_{P} of the transformer T₁ has an inherent magnetic inductance Lₘ which is shown in FIG. 8 as parallel-connected to the primary winding N_{P}. The resonant inductor Lᵣ, the magnetic inductance Lₘ, and the resonant capacitor Cᵣ are sequentially connected in series to form an LLC resonant circuit, which is connected in parallel to the second power switch Q₂. The primary winding N_{P} has one end connected via the resonant inductor Lᵣ to the line between the two power switches Q₁ and Q₂ and has an opposite end (hereinafter the second end) connected to one end of the resonant capacitor Cᵣ. The other end of the resonant capacitor Cᵣ is connected to the source of the second power switch Q₂. The auxiliary winding N_{A}, which is of the same polarity as the primary winding N_{P}, has one end connected to the line between the third rectifier D₃ and the fourth rectifier D₄ and the other end connected to the second end of the primary winding N_{P}.

In the third preferred embodiment, the auxiliary winding N_{A} can sense the voltage across the parasitic capacitance of the primary winding N_{P} and activate the third rectifier D₃ or the fourth rectifier D₄ accordingly, so as to guide the current through the resonant inductor Lᵣ to be circulated through the auxiliary winding N_{A}. The operating principle and effects of this LLC resonant power converter are identical to those of the LLC resonant power converter shown in FIG. 5.

The fourth preferred embodiment of the present invention provides an LLC resonant power converter having a current-circulating circuit for enabling light-load regulation as shown in FIG. 9. This LLC resonant power converter is different from its counterpart in FIG. 8 in that the resonant capacitor Cᵣ is now located between the primary winding N_{P} and the resonant inductor Lᵣ. Nonetheless, the operating principle and effects of the LLC resonant power converter in FIG. 9 are identical to those of the LLC resonant power converter in FIG. 8 and therefore will not be described repeatedly.

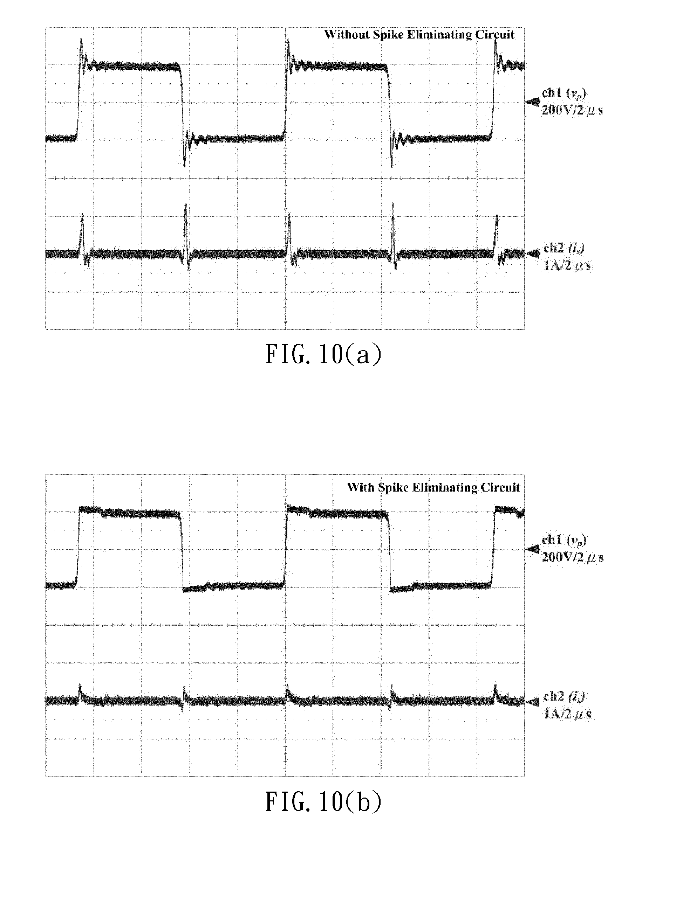

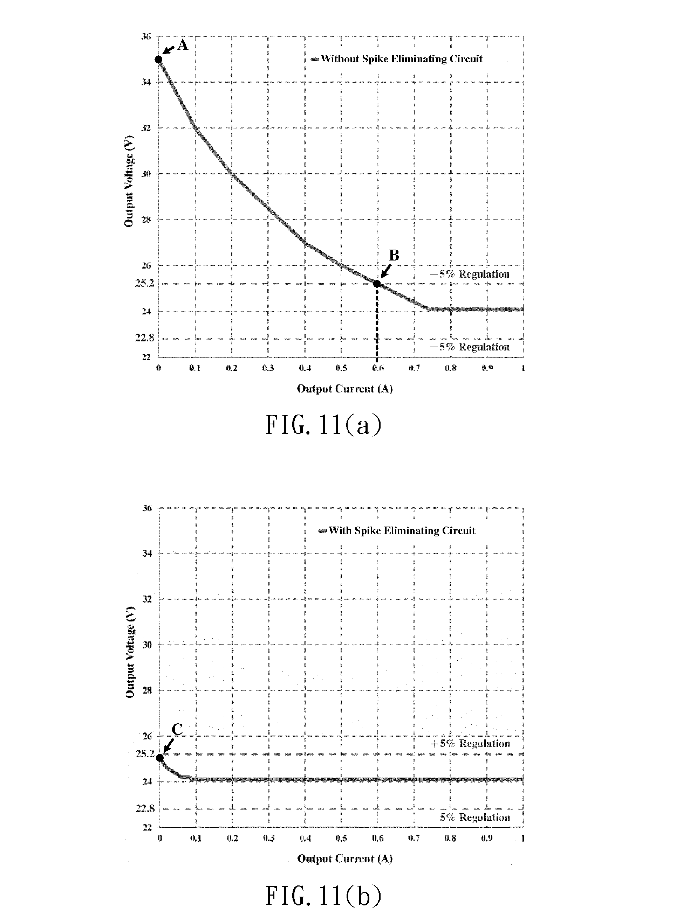

To verify the feasibility of the LLC resonant power converter of the present invention, the inventor put the circuit structure of FIG. 5 into practice and made an electronic circuit whose designed output power and designed output voltage are 300 W and 24 V respectively. In addition, an electronic circuit of the same specifications (but without the current-circulating circuit 51 of the present invention) was made according to the LLC resonant power converter circuit structure shown in FIG. 1 as a comparison sample. Both electronic circuits had their voltages and currents sampled and measured for a comparison of performance. More particularly, with the comparison sample in the no-load state, the voltage *vₚ* across the parasitic capacitance of the primary winding N_{P} and the current *iₛ* on the secondary side were sampled and measured with an oscilloscope. According to FIG. 10(a), which shows the test results of the comparison sample, significant spikes occurred in both the voltage *vₚ* across the parasitic capacitance of the primary winding N_{P} and the current *iₛ* on the secondary side. Consequently, referring to FIG. 11(a) for the load curve of the comparison sample, the output voltage Vₒ was not effectively kept in a certain range (e.g., within ±5% of the designed output voltage of 24 V) during the load range from position A to position B (0.6 A). The variation is nearly 50% from the designed output voltage of 24 V. The test results prove that the conventional LLC resonant power converter is incapable of light-load regulation. As to the electronic circuit of the present invention, the voltage *vₚ* across the parasitic capacitance of the primary winding N_{P} and the current *iₛ* on the secondary side were also sampled and measured with an oscilloscope in the no-load state. However, as shown in FIG. 10(b), the spikes in the voltage *vₚ* across the parasitic capacitance of the primary winding N_{P} and in the current *iₛ* on the secondary side were greatly subdued as compared with those of the comparison sample. Furthermore, as indicated at position C in FIG. 11(b), the output voltage Vₒ was kept within a certain range (e.g., within ±5% of the designed output voltage of 24 V), meaning that the LLC resonant power converter in FIG. 5 can effectively regulate its output voltage Vₒ and keep it in a certain range when under light load. Hence, it is apparent that the LLC resonant power converter of the present invention is definitely capable of achieving the intended effects of protecting the primary winding N_{P}, the secondary winding N_{S1} and N_{S2}, and the output capacitor Cₒ from spike currents which may otherwise result from excessive energy accumulated in the parasitic capacitance of the primary winding N_{P}, and allowing the output voltage Vₒ generated by the resonant power converter under light load to be effectively maintained within ±5% of the designed output voltage.

## Claims

1. An LLC resonant power converter with a current-circulating circuit for enabling light-load regulation, comprising:
a half-bridge circuit (52) composed of two power switches (Q₁, Q₂) connected in series, the half-bridge circuit (52) being connected in parallel to an input voltage (Vs);
a transformer (T₁) composed of a primary winding (N_{P}) and two secondary windings (N_{S1,} N_{S2});
an LLC resonant circuit composed of a resonant inductor (Lᵣ), a magnetic inductance (Lₘ), and a resonant capacitor (Cᵣ) connected in series, wherein the magnetic inductance (Lₘ) is inherent in the primary winding (N_{P}), the LLC resonant circuit being connected in parallel to one of the power switches (Q₁, Q₂);
the current-circulating circuit (51) composed of two rectifiers (D₃, D₄) connected in series, the current-circulating circuit (51) being connected in parallel to the half-bridge circuit (52), wherein a line between the two rectifiers (D₃, D₄) is cross-connected to a line between the resonant inductor (Lᵣ) and the primary winding (N_{P}) ; and
a full-wave rectification circuit (53) connected to the secondary windings (N_{S1}, N_{S2}) and configured for generating an output voltage across an output capacitor (Cₒ);
wherein when the power switches (Q₁, Q₂) are switched, the rectifiers (D₃, D₄) in the current-circulating circuit (51) are activated separately according to a voltage across a parasitic capacitance of the primary winding (N_{P}), so as to guide a current through the resonant inductor (Lᵣ) and cause circulation of the current, thereby preventing the voltage across the parasitic capacitance of the primary winding (N_{P}) from exceeding a difference obtained by subtracting a voltage across the resonant capacitor (Cᵣ) from the input voltage (Vs) or exceeding the voltage across the resonant capacitor (Cᵣ).

2. The LLC resonant power converter of claim 1, wherein the two power switches (Q₁, Q₂) include a first power switch (Q₁) and a second power switch (Q₂), the first power switch (Q₁) having a gate connected to a control pin of a resonant control chip, a drain connected to a positive terminal of the input voltage (Vs), and a source connected to a drain of the second power switch (Q₂), the second power switch (Q₂) further having a gate connected to a control pin of the resonant control chip and a source connected to a negative terminal of the input voltage (Vs), the half-bridge circuit (52) being thus configured to receive energy transferred from the input voltage (Vs) and provide a stable voltage to the transformer (T₁).

3. The LLC resonant power converter of claim 2, wherein the primary winding (N_{P}) has an end connected via the resonant inductor (Lᵣ) to a line between the two power switches (Q₁, Q₂) and has an opposite end connected to an end of the resonant capacitor (Cᵣ), the resonant capacitor (Cᵣ) having an opposite end connected to the source of the second power switch (Q₂).

4. The LLC resonant power converter of claim 3, wherein the two rectifiers (D₃, D₄) of the current-circulating circuit (51) include a third rectifier (D₃) and a fourth rectifier (D₄), the third rectifier (D₃) having a positive end connected to a negative end of the fourth rectifier (D₄), a line between the third rectifier (D₃) and the fourth rectifier (D₄) being cross-connected to the line between the resonant inductor (Lᵣ) and the primary winding (N_{P}) .

5. The LLC resonant power converter of claim 2, wherein the resonant capacitor (Cᵣ) has an end connected via the resonant inductor (Lᵣ) to a line between the two power switches (Q₁, Q₂), and the primary winding (N_{P}) has an end connected to an opposite end of the resonant capacitor (Cᵣ) and has an opposite end connected to the source of the second power switch (Q₂).

6. The LLC resonant power converter of claim 5, wherein the two rectifiers (D₃, D₄) of the current-circulating circuit (51) include a third rectifier (D3) and a fourth rectifier (D₄), the third rectifier (D₃) having a positive end connected to a negative end of the fourth rectifier (D₄), a line between the third rectifier (D₃) and the fourth rectifier (D₄) being cross-connected to a line between the resonant capacitor (Cᵣ) and the resonant inductor (Lᵣ).

7. An LLC resonant power converter with a current-circulating circuit for enabling light-load regulation, comprising:
a half-bridge circuit (52) composed of two power switches (Q₁, Q₂) connected in series, the half-bridge circuit (52) being connected in parallel to an input voltage (Vs);
a transformer (T₁) composed of a primary winding (N_{P}) and two secondary windings (N_{S1}, N_{S2});
an LLC resonant circuit composed of a resonant inductor (Lᵣ), a magnetic inductance (Lₘ), and a resonant capacitor (Cᵣ) connected in series, wherein the magnetic inductance (Lₘ) is inherent in the primary winding (N_{P}), the LLC resonant circuit being connected in parallel to one of the power switches (Q₁, Q₂);
the current-circulating circuit (51) composed of two rectifiers (D₃, D₄) connected in series, the current-circulating circuit (51) being connected in parallel to the half-bridge circuit (52);
an auxiliary winding (N_{A}) of a same polarity as the primary winding (N_{P}), the auxiliary winding (N_{A}) having a first end connected to a line between the two rectifiers (D₃, D₄) and a second end connected to the LLC resonant circuit; and
a full-wave rectification circuit (53) connected to the secondary windings (N_{S1}, N_{S2}) and configured for generating an output voltage across an output capacitor (Cₒ);
wherein when the power switches (Q₁, Q₂) are switched, the auxiliary winding (N_{A}) senses a voltage across a parasitic capacitance of the primary winding (N_{P}) and activates the rectifiers (D₃, D₄) of the current-circulating circuit (51) separately, so as to guide a current through the resonant inductor (Lᵣ) and cause the current to circulate through the auxiliary winding (N_{A}), thereby preventing the voltage across the parasitic capacitance of the primary winding (N_{P}) from exceeding a difference obtained by subtracting a voltage across the resonant capacitor (Cᵣ) from the input voltage (Vs) or exceeding the voltage across the resonant capacitor (Cr).

8. The LLC resonant power converter of claim 7, wherein the two power switches (Q₁, Q₂) include a first power switch (Q₁) and a second power switch (Q₂), the first power switch (Q₁) having a gate connected to a control pin of a resonant control chip, a drain connected to a positive terminal of the input voltage (Vs), and a source connected to a drain of the second power switch (Q₂), the second power switch (Q₂) further having a gate connected to a control pin of the resonant control chip and a source connected to a negative terminal of the input voltage (Vs), the half-bridge circuit (52) being thus configured to receive energy transferred from the input voltage (Vs) and provide a stable voltage to the transformer (T₁).

9. The LLC resonant power converter of claim 8, wherein the primary winding (N_{P}) has an end connected via the resonant inductor (Lᵣ) to a line between the two power switches (Q₁, Q₂) and has an opposite end connected to an end of the resonant capacitor (Cᵣ), the resonant capacitor (Cᵣ) having an opposite end connected to the source of the second power switch (Q₂).

10. The LLC resonant power converter of claim 8, wherein the resonant capacitor (Cᵣ) has an end connected via the resonant inductor (Lᵣ) to a line between the two power switches (Q₁, Q₂), and the primary winding (N_{P}) has an end connected to an opposite end of the resonant capacitor (Cᵣ) and has an opposite end connected to the source of the second power switch (Q₂).

11. The LLC resonant power converter of claim 9 or 10, wherein the two rectifiers (D₃, D₄) of the current-circulating circuit (51) include a third rectifier (D₃) and a fourth rectifier (D₄), the third rectifier (D₃) having a positive end connected to a negative end of the fourth rectifier (D₄), a line between the third rectifier (D₃) and the fourth rectifier (D₄) being connected to the first end of the auxiliary winding (N_{A}).
